Europäisches Patentamt

European Patent Office

Office européen des brevets

(19)

(11) Numéro de publication: **0 086 690
B1**

(12)

# FASCICULE DE BREVET EUROPEEN

(45) Date de publication du fascicule du brevet:
**31.07.85**

(21) Numéro de dépôt: **83400223.0**

(22) Date de dépôt: **02.02.83**

(51) Int. Cl.⁴: **B 62 D 43/04,** B 60 R 21/00

(54) Dispositif de rangement d'une roue de secours sur un véhicule automobile.

(30) Priorité: **17.02.82 FR 8202579**

(43) Date de publication de la demande:
**24.08.83 Bulletin 83/34**

(45) Mention de la délivrance du brevet:
**31.07.85 Bulletin 85/31**

(84) Etats contractants désignés:
**DE GB IT**

(56) Documents cités:
**DE - A - 2 313 588
FR - A - 2 067 958
FR - A - 2 317 152**

**AUTOMOTIVE ENGINEER, vol. 4, no. 4, août/septembre
1979, page 106, St Edmunds, Suffolk (GB); "Safe spare
wheel location"**

(73) Titulaire: **AUTOMOBILES PEUGEOT, 75, avenue de la
Grande Armée, F-75116 Paris (FR)**
Titulaire: **AUTOMOBILES CITROEN, 62 Boulevard
Victor-Hugo, F-92200 Neuilly-sur-Seine (FR)**

(72) Inventeur: **Ledu, Marc, 24 Rue de la Marne,
F-78800 Houilles (FR)**

(74) Mandataire: **Moncheny, Michel et al, c/o Cabinet
Lavoix 2 Place d'Estienne d'Orves, F-75441 Paris
Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

**Description**

L'invention se rapporte à un dispositif destiné à maintenir une roue de secours sous le plancher d'un véhicule automobile.

Il est courant de disposer le réservoir de combustible et la roue de secours sous le plancher du coffre à bagages, ce qui correspond à la fois à une utilisation optimale des volumes et à une bonne accessibilité permanente de la roue de secours.

Par ailleurs, on sait que pour limiter les effets d'un accident grave sur les occupants, les véhicules actuels sont conçus pour permettre une absorption maximale de l'énergie cinétique mise en jeu lors d'un choc, par écrasement des parties extrêmes avant et arrière, de façon à préserver la partie centrale, c'est à dire l'habitacle dans lequel se trouvent les passagers. Il peut donc arriver, lors d'un accident important, que le réservoir soit soumis aux effets du choc, soit directement s'il est trop près de l'extrémité du véhicule, soit par l'intermédiaire de la roue de secours si cette dernière se trouve à peu près dans le même plan horizontal que le réservoir. Il s'ensuit un risque grave de déformation du réservoir, pouvant entraîner une rupture de celui-ci et une projection d'essence, particulièrement dangereuse car aggravant les risques d'incendie.

On a déjà proposé, dans le brevet français 2 067 958, un agencement particulier qui oblige la roue de secours à glisser sous le réservoir en cas de choc violent. Cependant, cet agencement antérieur a pour inconvénient de limiter la capacité du réservoir.

Dans un autre agencement, qui fait l'objet du brevet français 2 317 152, la roue de secours est portée par un panier qui est articulé autour d'un axe transversal sur au moins un support lui-même articulé autour d'un deuxième axe transversal situé, par rapport au premier, vers le centre du véhicule et à un niveau supérieur, un moyen de liaison entre le plancher et le support immobilisant ce dernier en service normal.

Dans ce agencement, un écrasement de la partie arrière du véhicule provoque la rupture dudit moyen de liaison et le basculement du support repousse la roue de secours vers le bas, lui permettant ainsi de passer sous le réservoir sans l'écraser. Cet agencement permet bien d'accroître le volume du réservoir, par rapport à l'agencement précédent. Cependant, il nécessite un espace libre au-dessus de la partie avant de la roue de secours, pour permettre son dégagement, en service normal, du fait de la position de l'axe d'articulation du panier.

Le but de cette invention est de proposer une version modifiée de ce dernier agencement qui ne présente pas cet inconvénient, tout en comportant les mêmes avantages sur le plan de la sécurité.

Elle s'applique donc à un dispositif de rangement d'une roue de secours sous le plancher d'un véhicule derrière le réservoir de carburant, comportant un panier articulé par rapport au plancher autour d'un axe transversal, deux biellettes de direction ascendante en se dirigeant vers le centre du véhicule étant articulées d'une part sur le panier, d'autre part, sur le plancher.

Ce dispositif est caractérisé en ce qu'en service normal, des moyens de liaison immobilisent les biellettes sur le panier l'articulation supérieure des biellettes sur le plancher constituant l'articulation du panier par rapport au plancher.

Suivant d'autres caractéristiques:

— les moyens de liaison comprennent pour chaque biellette une ferrure solidaire du panier;
— chaque ferrure comporte deux pattes disposées de part et d'autre de la biellette adjacente;
— en position de service normal, les biellettes ont une direction à peu près perpendiculaire à celle d'un pan coupé du réservoir de carburant;
— l'axe d'articulation des biellettes sur le plancher est situé au voisinage du bord avant de la roue en position normale de rangement de cette dernière.

Un exemple de réalisation fait l'objet de la description qui suit, en référence aux dessins joints dans lesquels:

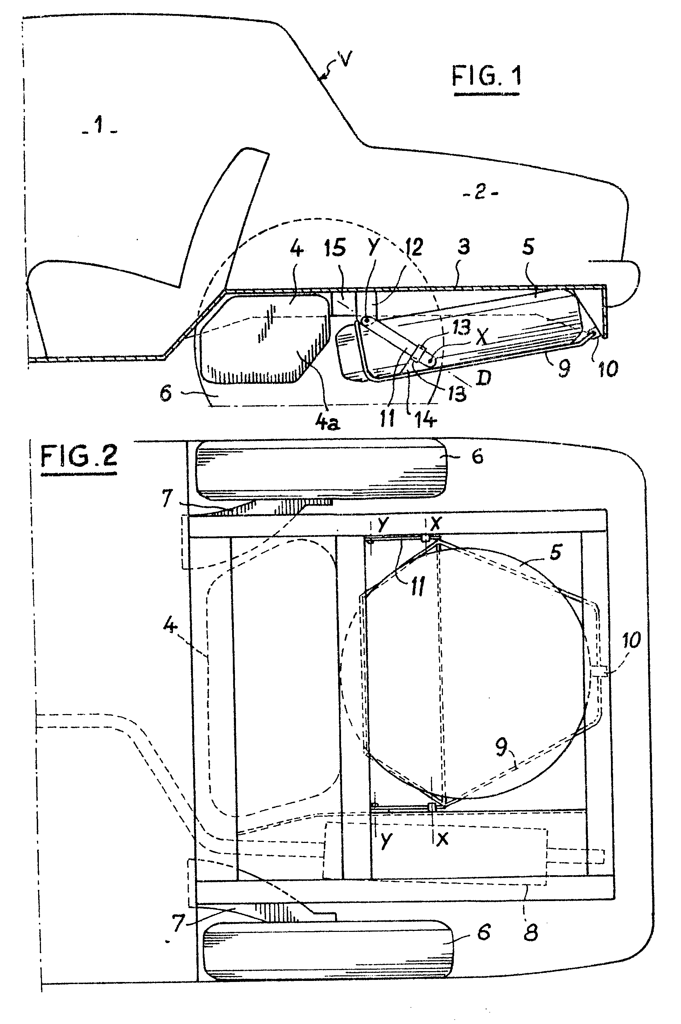

la Fig. 1 est une vue schématique en coupe longitudinale de la partie arrière d'un véhicule agencé selon l'invention;

la Fig. 2 est une vue en plan schématique de cette même partie du véhicule;

les Fig. 3 et 4 sont des vues de détail, à plus grande échelle, la Fig. 4 étant une vue en coupe suivant la ligne 4-4 de la Fig. 3;

la Fig. 5 est une vue analogue à celle de la Fig. 1, après l'écrasement de la partie arrière, consécutif à un choc.

On a représenté au dessin la partie arrière d'un véhicule V à moteur et traction avant et coffre à bagages arrière. Ce véhicule comporte un habitacle 1 et un coffre à bagages 2 sous le plancher 3 duquel sont disposés en réservoir de combustible 4 et une roue de secours 5. Le réservoir présente, de préférence, à sa partie arrière un pan coupé 4a.

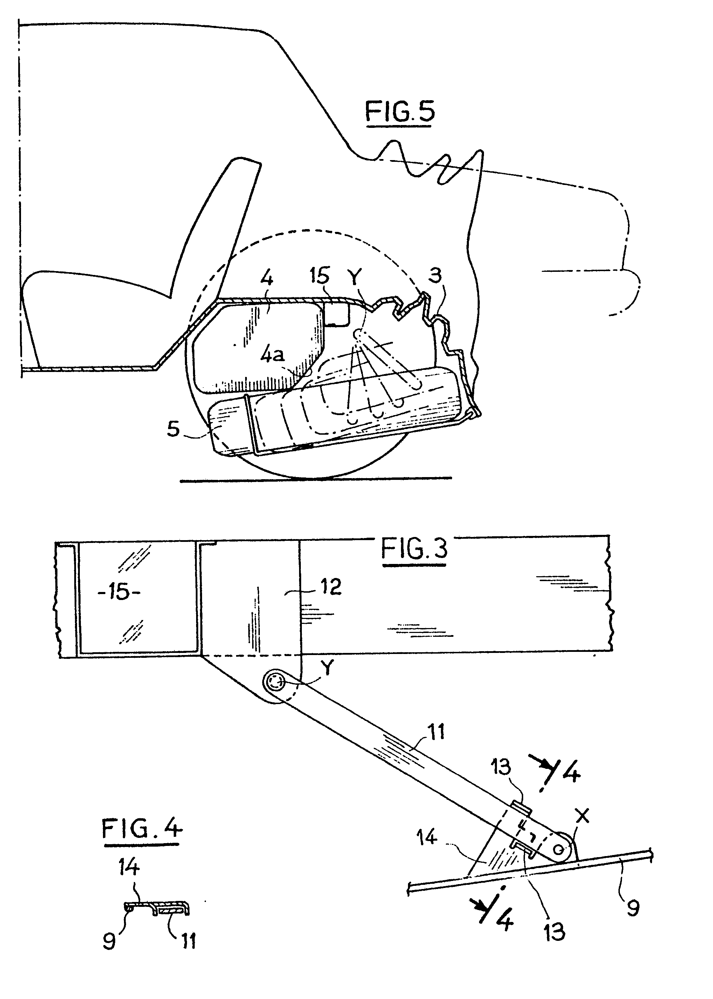

On a également représenté, sur ce dessin, des roues arrière 6 montées sur des bras de suspension 7 articulés sur la caisse du véhicule, et une tubulure d'échappement 8 (Fig. 2).

Le réservoir 4 est placé le plus en avant possible, entre les roues arrière 6 et, de préférence, de façon à ne pas dépasser en arrière de celles-ci. Sa forme, en plan est telle qu'il occupe le volume disponible entre une roue 6 et son bras de suspension 7, d'une part, et la tubulure d'échappement 8, d'autre part.

La roue de secours 5 est disposée dans un panier 9 accroché à l'arrière par un dispositif de verrouillage usuel 10 qui peut être ouvert, par exemple, à partir de l'intérieur du coffre 2 ou de l'intérieur de l'habitacle 1.

De part et d'autre de la roue de secours 5, sont disposées deux biellettes 11 dont l'extrémité inférieure est articulée sur le panier 9, autour d'un axe transversal X-X, et dont l'autre extrémité est articulée sur des goussets 12 solidaires du plancher 3, autour d'un axe transversal Y-Y. Ce dernier est situé, par rapport à l'axe X-X, vers le centre du véhicule et à un niveau supérieur. La droite D joignant les traces des axes X-X et Y-Y est, de préférence, à peu près perpendiculaire au pan coupé 4a du réservoir.

Chaque biellette 11 est enserrée entre deux pattes 13 d'une ferrure 14 solidaire du panier 9 de sorte qu'en service normal les biellettes 11 sont immobilisées par rapport au panier 9. Par conséquent, le dégagement de la roue de secours 5, après libération du dispositif de verrouillage 10, se fait par pivotement du panier 9 autour de l'axe Y-Y. Compte tenu de la position de cet axe, très près du bord ou de la périphérie de la roue, ce pivotement se fait pratiquement sans remontée de la partie avant de la roue de secours, remontée que rendrait impossible la présence d'une traverse 15.

Si le véhicule ainsi agencé subit un choc important par l'arrière, les tôles délimitant le coffre à bagages subissent un écrasement en absorbant une quantité importante d'énergie. Simultanément, la roue de secours 5 est repoussée vers l'avant et les biellettes 11, du fait de leur orientation initiale, tendent à basculer vers le bas, autour de l'axe Y-Y, après avoir forcé les pattes 13.

Le mouvement des biellettes 11 a pour effet de déplacer la roue de secours 5 vers le bas, comme indiqué sur la Fig. 5, de sorte que la roue passe sous le réservoir. Etant donné l'orientation initiale de la droite D joignant les traces des axes X-X et Y-Y par rapport au pan coupé 4a, le déplacement initial de la roue s'effectue à peu près parallèlement au pan coupé 4a, ce qui constitue la condition la plus favorable.

L'agencement selon l'invention permet donc bien d'atteindre le but fixé puisque la trajectoire suivie par la roue de secours permet d'éviter l'écrasement du réservoir de carburant sans qu'il soit nécessaire de réduire de façon sensible la capacité de ce dernier. Les moyens mis en jeu sont par ailleurs très simples, très fiables et d'un prix de revient modique.

## Revendications

1. Dispositif de rangement d'une roue de secours (5) sous le plancher (3) d'un véhicule derrière le réservoir de carburant, comportant un panier (9) articulé par rapport au plancher autour d'un axe transversal (Y-Y), deux biellettes (11) de direction ascendante en se dirigeant vers le centre du véhicule étant articulées d'une part sur le panier, d'autre part sur le plancher, caractérisé en ce qu'en service normal, des moyens de liaison (13, 14) immobilisent les biellettes (11) sur le panier (9), l'articulatin supérieure des biellettes sur le plancher constituant l'articulation (Y-Y) du panier par rapport au plancher.

2. Dispositif suivant la revendication 1, caractérisé en ce que les moyens de liaison comprennent pour chaque biellette une ferrure (14) solidaire du panier.

3. Dispositif suivant la revendication 2, caractérisé en ce que chaque ferrure (14) comporte deux pattes (13) disposées de part et d'autre de la biellette adjacente.

4. Dispositif suivant la revendication 1, caractérisé en ce qu'en position de service normal, les biellettes (11) ont une direction à peu près perpendiculaire à celle d'un pan coupé (4a) du réservoir de carburant.

5. Dispositif suivant la revendication 1, caractérisé en ce que l'axe (Y-Y) d'articulation des biellettes sur le plancher est situé au voisinage du bord avant de la roue, en position normale de rangement de cette dernière.

## Patentansprüche

1. Vorrichtung zum Verstauen eines Ersatzrads (5) unter dem Boden (3) eines Fahrzeugs hinter dem Kraftstoffbehälter, mit einem am Boden an einer Querachse (Y-Y) angelenkten Korb (9), wobei zwei ansteigende und zur Fahrzeugmitte gerichtete Schwenkarme (11) einerseits am Korb und andererseits am Boden angelenkt sind, dadurch gekennzeichnet, daß im normalen Betrieb Verbindungsmittel (13, 14) die Schwenkarme (11) am Korb (9) festlegen, wobei die obere Anlenkung der Schwenkarme am Boden die Anlenkung (Y-Y) des Korbs am Boden bildet.

2. Vorrichtung nach Anspruch 1, dadurch gekennzeichnet, daß die Verbindungsmittel für jeden Schwenkarm einen mit dem Korb fest verbundenen Beschlag (14) aufweisen.

3. Vorrichtung nach Anspruch 2, dadurch gekennzeichnet, daß jeder Beschlag (14) zwei beiderseits des angrenzenden Schwenkarms angeordnete Laschen (13) aufweist.

4. Vorrichtung nach Anspruch 1, dadurch gekennzeichnet, daß in normaler Betriebsstellung die Richtung der Schwenkarme (11) ungefähr senkrecht zu derjenigen einer Schnittfläche (4a) des Kraftstoffbehälters ist.

5. Vorrichtung nach Anspruch 1, dadurch gekennzeichnet, daß in normaler Verstaustellung des Rads sich die Anlenkachse (Y-Y) der Schwenkarme am Boden in Nähe des vorderen Rands des Rads befindet.

## Claims

1. A device for stowing away a spare wheel (5) under the floor (3) of a vehicle, rearwardly with respect to the fuel tank, comprising a basket (9) pivoted to the floor about a transverse axis (Y-Y), two links (11) extending upwardly toward the centre of the vehicle being pivoted, on one hand, to the basket, on the other hand, to the floor, characterised in that, in normal service, connecting means (13, 14) immobilize the links (11) on the basket (9), the upper pivotal mounting of the links on the floor constituting the pivotal mounting (Y-Y) of the basket with respect to the floor.

2. A device according to claim 1, characterised in that the connecting means comprise for each link a bracket (14) rigid with the basket.

3. A device according to claim 2, characterised in that each bracket (14) comprises two tabs (13) disposed on each side of the adjacent link.

4. A device according to claim 1, characterised in that the links (11), in their normal service position, extend in a direction substantially perpendicular to an inclined wall portion (4a) of the fuel tank.

5. A device according to claim 1, characterised in that the axis (Y-Y) about which the links pivot relative to the floor is located in the vicinity of the front edge of the spare wheel, in the normal stowed-away position of the spare wheel.

FIG. 1

_1_

V

_2_

4  15  Y  12  3  5

13  X

6

4a

13

D

9  10

11  14

FIG.2

6

7

Y  X

5

11

4

10

9

Y  X

7

6  8

FIG.5

4   15   Y   3

4a

5

FIG.3

-15-

12

Y

11

13

14

X

9

4

4

13

FIG.4

14

9   11